# EUROPÄISCHE PATENTSCHRIFT

(11) **EP 1 624 211 B1**
(45) Veröffentlichungstag und Bekanntmachung des Hinweises auf die Patenterteilung: **27.06.2007**
(21) Anmeldenummer: 05016724.6
(22) Anmeldetag: 02.08.2005
(51) Int. Cl.: F16D 13/75

(54) **Druckplattenbaugruppe für eine Reibungskupplung**
Pressure plate assembly for friction clutch
Ensemble plateau de pression pour un embrayage à friction

(30) Priorität: 06.08.2004 DE 102004038266; 24.02.2005 DE 102005008393
(43) Veröffentlichungstag der Anmeldung: 08.02.2006
(73) Patentinhaber: ZF FRIEDRICHSHAFEN AG, 88046 Friedrichshafen (DE)
(72) Erfinder: Weidinger, Reinhold, 97509 Unterspiesheim (DE)

(56) Entgegenhaltungen:
- DE-A1- 10 155 146
- DE-A1- 10 247 013
- US-A1- 2002 079 187

## Beschreibung

Die vorliegende Erfindung betrifft eine Druckplattenbaugruppe für eine Reibungskupplung, umfassend eine Gehäuseanordnung, eine in der Gehäuseanordnung vorgesehene und mit dieser um eine Drehachse drehbare Anpressplatte, eine Kraftbeaufschlagungsanordnung, vorzugsweise Kraftspeicher, welche bezüglich der Gehäuseanordnung und der Anpressplatte abstützbar ist, eine Verschleißnachstellvorrichtung im Kraftübertragungsweg zwischen der Kraftbeaufschlagungsanordnung und der Anpressplatte oder der Gehäuseanordnung, umfassend wenigstens ein zur Verschleißnachstellung bewegbares Verschleißnachstellelement, wobei dem wenigstens einen Verschleißnachstellelement ein Stellelement zugeordnet ist, welches bei Durchführung einer Stellbewegung das wenigstens eine Verschleißnachstellelement zur Durchführung einer Verschleißnachstellung zur Bewegung antreibt, wobei das dem wenigstens einen Verschleißnachstellelement zugeordnete Stellelement durch Fliehkrafteinwirkung zur Durchführung einer Stellbewegung beaufschlagbar ist.

Eine derartige Druckplattenbaugruppe ist beispielsweise aus der DE 102 47 013 A1 bekannt. Bei dieser Druckplattenbaugruppe ist ein fliehkraftangetriebener Ratschenmechanismus vorhanden, der bei Auftreten von Verschleiß durch die Fliehkraftbeaufschlagung eines Stellelements einen Nachstellring zur Drehung und somit zur Verschleißkompensation antreibt. Das Stellelement wirkt über eine Verzahnung mit dem Nachstellring zusammen, wobei die Bewegung des Stellelements in die Nachstellausgangsstellung dadurch ermöglicht wird, dass die Verzahnung an diesem und eine Verzahnung am Nachstellring außer Eingriff treten können. Dies erfordert eine entsprechende Verlagerbarkeit des Nachstellelements und birgt die Gefahr, dass die korrekte Wechselwirkung der Verzahnungen nicht immer bereitgestellt werden kann. Ferner ist ein Blattfederelement vorhanden, das auf das Stellelement einwirkt und bei Auftreten von Verschleiß an einem gehäusefesten Anschlag zur Anlage kommt und dabei eine Einklemmung des Nachstellelements aufgibt, so dass dieses in seine Nachstellausgangsstellung gelangen kann.

Es ist die Aufgabe der vorliegenden Erfindung, eine gattungsgemäße Druckplattenbaugruppe derart auszugestalten, dass bei einfachem Aufbau eine hohe Betriebssicherheit erlangt werden kann.

Erfindungsgemäß wird diese Aufgabe gelöst durch eine Druckplattenbaugruppe für eine Reibungskupplung, umfassend eine Gehäuseanordnung, eine in der Gehäuseanordnung vorgesehene und mit dieser um eine Drehachse drehbare Anpressplatte, eine Kraftbeaufschlagungsanordnung, vorzugsweise Kraftspeicher, welche bezüglich der Gehäuseanordnung und der Anpressplatte abstützbar ist, eine Verschleißnachstellvorrichtung im Kraftübertragungsweg zwischen der Kraftbeaufschlagungsanordnung und der Anpressplatte oder der Gehäuseanordnung, umfassend wenigstens ein zur Verschleißnachstellung bewegbares Verschleißnachstellelement, wobei dem wenigstens einen Verschleißnachstellelement ein Stellelement zugeordnet ist, welches bei Durchführung einer Stellbewegung das wenigstens eine Verschleißnachstellelement zur Durchführung einer Verschleißnachstellung zur Bewegung antreibt, wobei das dem wenigstens einen Verschleißnachstellelement zugeordnete Stellelement durch Fliehkrafteinwirkung zur Durchführung einer Stellbewegung beaufschlagbar ist.

Dabei ist weiter vorgesehen, dass das Stellelement über ein Übertragungsglied mit dem Verschleißnachstellelement zusammenwirkt, wobei das Übertragungsglied bei Auftreten von Verschleiß und Bringen des Stellelements in eine Nachstellausgangsstellung bezüglich des Verschleißnachstellelements bewegbar ist und bei Durchführung einer Verschleißnachstellung und Stellbewegung des Stellelements aus der Nachstellausgangsstellung heraus durch das Stellelement zur gemeinsamen Bewegung mit dem Verschleißnachstellelement beaufschlagbar ist.

Bei dem erfindungsgemäßen Aufbau ist also die Wechselwirkung zwischen dem Stellelement und dem Verschleißnachstellelement durch ein Übertragungsglied bewerkstelligt, das immer zuverlässig mit dem Stellelement zusammenwirken kann und, je nach Bewegungsmodus, mit dem Verschleißnachstellelement bewegbar ist oder bezüglich diesem bewegbar ist, um eine nachfolgende Verschleißnachstellung vorbereiten zu können.

Hierzu wird vorgeschlagen, dass das Übertragungsglied zur Verschleißnachstellung an dem Verschleißnachstellelement arretierbar ist. Vorzugsweise kann diese Arretierung dadurch erlangt werden, dass das Übertragungsglied durch das Stellelement in Reibungsklemmsitz an dem Verschleißnachstellelement bringbar ist.

Um die Vorbereitung eines Nachstellvorgangs erlangen zu können, d.h. das Stellelement in seine Nachstellausgangsstellung bringen zu können, wird vorgeschlagen, dass ein Vorspannelement vorgesehen ist zum Vorspannen des Stellelements in Richtung Nachstellausgangsstellung. In dieses Vorspannelement kann eine zusätzliche Funktion dadurch integriert werden, dass das Vorspannelement das Übertragungsglied zum Lösen des Reibungsklemmsitzes und zur Bewegung des Übertragungsglieds bezüglich des Verschleißnachstellelements beaufschlagt. Dabei kann beispielsweise vorgesehen sein, dass das Vorspannelement das Stellelement über das Übertragungsglied beaufschlagt.

Das Stellelement kann vorzugsweise an der Anpressplatte schwenkbar getragen sein. Dies ist insbesondere dann von Vorteil, wenn die Verschleißnachstellvorrichtung im Kraftübertragungsweg zwischen der Anspressplatte und der Kraftbeaufschlagungsanordnung liegt.

Um sicherzustellen, dass eine Verschleißnachstellung nur dann auftritt, wenn dies tatsächlich erforderlich ist, wird vorgeschlagen, dass dem Stellelement eine Blockiervorrichtung zugeordnet ist, welche dieses bei Auftreten von zu kompensierendem Verschleiß zur Bewegung in die Nachstellausgangsstellung freigibt.

Dabei kann beispielsweise vorgesehen sein, dass die Blockiervorrichtung ein in eine Blockierstellung vorgespanntes Blockierelement umfasst, welches bei Auftreten von zu kompensierendem Verschleiß in eine Freigabestellung bringbar ist. Dabei kann das Blockierelement an der Anpressplatte zwischen der Blockierstellung und der Freigabestellung schwenkbar sein.

Die Blockierung bzw. Arretierung des Nachstellelements kann beispielsweise dadurch erfolgen, dass in der Blockierstellung die Blockiervorrichtung das Stellelement gegen Bewegung in die Nachstellausgangsstellung einklemmt. Diese Klemmung kann beispielsweise gegen die Kraftbeaufschlagungsanordnung erfolgen.

Um bei Auftreten von Verschleiß dafür sorgen zu können, dass das Stellelement in seine Nachstellausgangsstellung bewegt werden kann, wird vorgeschlagen, dass die Blockiervorrichtung durch eine bei Auftreten von Verschleiß sich bezüglich des Nachstellelements verschleißbedingt verlagernde Baugruppe in die Freigabestellung bringbar ist. Hierzu kann beispielsweise eine verschleißbedingt auftretende Bewegung der Kraftbeaufschlagungsanordnung sensiert werden. Ferner kann die Baugruppe die Gehäuseanordnung umfassen.

Die vorliegende Erfindung wird nachfolgend mit Bezug auf die beiliegenden Zeichnungen detailliert beschrieben. Es zeigt:
- Fig. 1: eine Teil-Längsschnittansicht einer erfindungsgemäßen Druckplattenbaugruppe;
- Fig. 2: eine Teil-Axialansicht der wesentlichen Komponenten der erfindungsgemäßen Druckplattenbaugruppe;

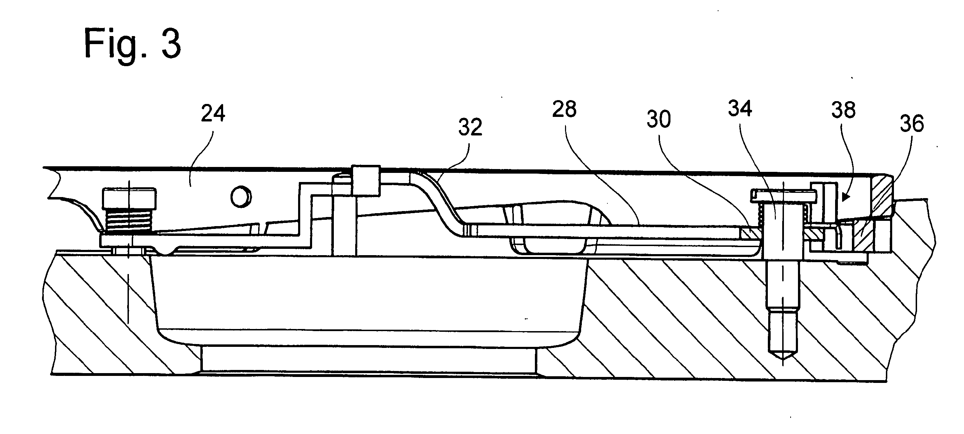

- Fig. 3: eine Schnittansicht der in Fig. 2 dargestellten Komponenten, geschnitten längs einer Linie III-III in Fig. 2;
- Fig. 4: eine perspektivische Ansicht der in den Fig. 2 und 3 gezeigten Komponenten;
- Fig. 5: eine perspektivische Ansicht eines Übertragungsglieds;
- Fig. 6: eine perspektivische Ansicht eines Blockierelements;
- Fig. 7: eine der Fig. 2 entsprechende Ansicht mit in einer Nachstellausgangsstellung sich befindendem Stellelement;
- Fig. 8: eine der Darstellung der Fig. 2 entsprechende Ansicht einer alternativen Ausgestaltungsform;
- Fig. 9: eine Schnittansicht der Darstellung in der Fig. 8, geschnitten längs einer Linie IX-IX in Fig. 8;
- Fig. 10: eine perspektivische Ansicht des in der Ausgestaltungsform gemäß Fig. 8 eingesetzten Blockierelements;
- Fig. 11: eine der Darstellung der Fig. 9 entsprechende Ansicht einer weiteren alternativen Ausgestaltungsform;
- Fig. 12: eine weitere der Darstellung der Fig. 9 entsprechende Ansicht einer alternativen Ausgestaltungsform.

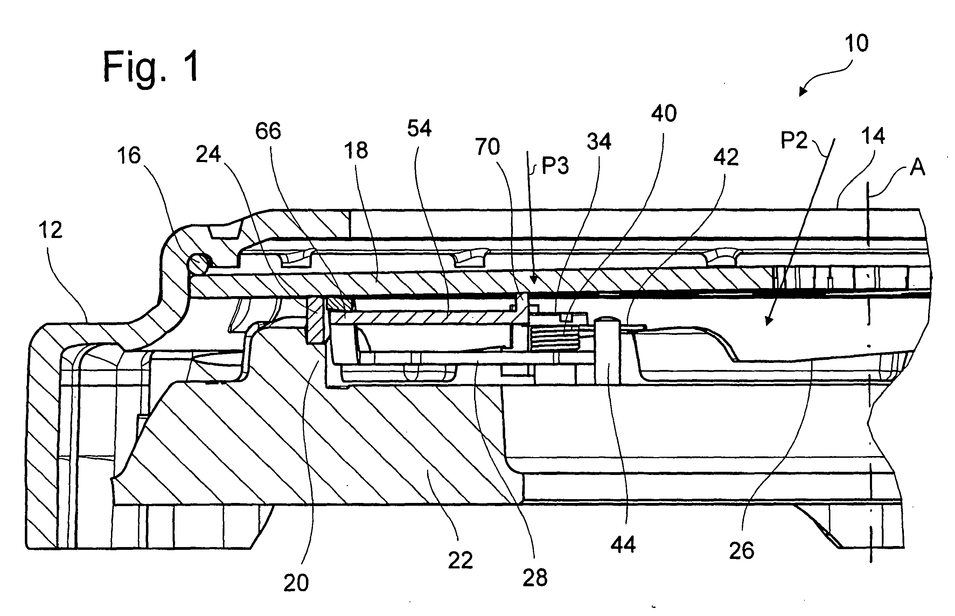

In Fig. 1 ist eine erfindungsgemäße Druckplattenbaugruppe allgemein mit 10 bezeichnet. Diese für eine Kupplung des gezogenen Typs vorgesehene Druckplattenbaugruppe 10 umfasst ein Gehäuse 12, das in an sich bekannter Weise zur Kopplung mit einer Schwungmasse, also beispielsweise Schwungrad, Zweimassenschwungrad o.dgl., ausgebildet ist. An einem Bodenbereich 14 des Gehäuses 12 stützt sich im radial äußeren Bereich über einen aus Drahtmaterial gebildeten Abstützring 16 ein beispielsweise als Membranfeder o.dgl. ausgebildeter Kraftspeicher 18 ab. Dieser beaufschlagt radial weiter innen, radial bezogen auf die Drehachse A der Druckplattenbaugruppe 10, eine Anpressplatte 22 über eine Verschleißnachstellvorrichtung 20. Im radial inneren Endbereich kann an dem Kraftspeicher 18 ziehend angegriffen werden, um diesen entgegen seiner Vorspannkraftwirkung zu belasten und somit die Druckplattenbaugruppe 10 und die damit aufgebaute Reibungskupplung auszurücken. Es sei darauf hingewiesen, dass als Kraftbeaufschlagungsanordnung nicht notwendigerweise ein derartiger Kraftspeicher 18 wirksam sein muss. Bei einer Reibungskupplung des Normal-Offen-Typs könnte dies auch eine Hebelanordnung sein, welche durch eine Aktuatoranordnung zur Erzeugung einer Einrückkraft belastet wird.

Die Verschleißnachstellvorrichtung 20 umfasst im Kraftübertragungsweg zwischen dem Kraftspeicher 18 und der Anpressplatte 22 einen Nachstellring 24. Dieser wird durch den Kraftspeicher 18 belastet und liegt an der Anpressplatte 22 über eine Rampenflächenanordnung 26 an. Eine Umfangsdrehung des Nachstellrings 22 führt dazu, dass die von dem Kraftspeicher 18 belastete Oberfläche desselben sich axial bezüglich der Anpressplatte 22 verlagert, und zwar derart, dass dieser Abstand zunimmt und somit die gesamte axiale Dicke der aus Anpressplatte 22 und Nachstellring 24 gebildeten Baugruppe ansteigt.

Die Verschleißnachstellvorrichtung 20 umfasst ferner ein Stellelement 28. Dieses liegt an der radialen Innenseite des Nachstellrings 24 und ist in einem Umfangsendbereich 30 über ein Schraubbolzenelement 34 o.dgl. an der Anpressplatte 22 um eine zur Drehachse A im Wesentlichen parallele Schwenkachse schwenkbar getragen.

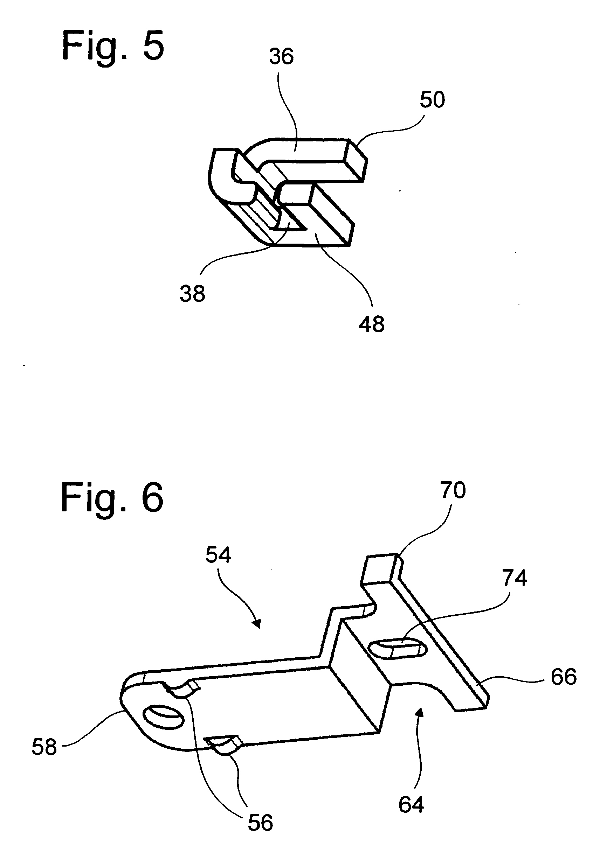

Ein im Wesentlichen U-förmig ausgestaltetes und in Fig. 5 perspektivisch dargestelltes Übertragungsglied 36 ist so positioniert, dass der Nachstellring 24 in eine schlitzartige Aussparung 38 desselben eingreift bzw. darin positioniert ist. Dabei hat der Nachstellring 24 etwas Bewegungsspiel in der schlitzartigen Aussparung, so dass grundsätzlich das Übertragungsglied 36 bezüglich des Nachstellrings 24 geringfügig verkippen kann. Eine Schenkelfeder 40 ist mit ihrem schraubenartig gewundenen Körperbereich den Bolzen 34 umgebend angeordnet und stützt sich mit ihrem Schenkel 42 an einem an der Anpressplatte 22 gebildeten Widerlager 44 ab, während ihr anderer Schenkel 46 das Übertragungsglied 36 belastet. Da das Übertragungsglied 36 mit der U-förmigen Gestalt ausgebildet ist und zwei unter dem Nachstellring 24 liegende U-Schenkel 48, 50 aufweist, ist gewährleistet, dass durch die Belastung der Schenkelfeder 40 das Übertragungsglied 36 näherungsweise um ein zur Drehachse A im Wesentlichen parallele Achse verkippt.

Das in Umfangsrichtung langgestreckte Stellelement 28 weist in seinem Endbereich 30 eine zu seiner Schwenkachse exzentrische Schulter 50 auf. Mit dieser Schulter 50 beaufschlagt es den U-Schenkel 48 des Übertragungsglieds 36 in einer Richtung, welche der Belastungsrichtung des selben U-Schenkels 48 durch den Schenkel 46 der Schenkelfeder 40 entgegengerichtet ist. Das heißt, durch die Belastungswirkung der Schenkelfeder 40 wird der U-Schenkel 48 des Übertragungsglieds 36 gegen die Schulter 50 des Nachstellelements 28 gepresst.

Dem Stellelement 28 ist ferner eine allgemein mit 52 bezeichnete Blockiereinrichtung zugeordnet. Diese umfasst ein als Kipphebel ausgestaltetes Blockierelement 54. Das in Fig. 6 dargestellte Blockierelement 54 ist mit zwei Abstützvorsprüngen 56 an der Anpressplatte 22 abgestützt, welche somit eine Kippachse definieren. An einem Endbereich 58 durchsetzt ein Bolzen 60 das Blockierelement 54. Zwischen diesem Endbereich 58 des Blockierelements 54 und dem erweiterten Kopfbereich dieses Bolzens 60 wirkt eine Vorspannfeder 62, beispielsweise ausgestaltet als Schraubendruckfeder. Diese belastet somit den Endbereich 58 des Blockierelements 54, so dass der andere Endbereich 64 desselben in Richtung von der Anpressplatte 22 weg und auf den Kraftspeicher 18 zu vorgespannt ist. An diesem Endbereich 64 weist das Blockierelement 54 einen Blockierabschnitt 66 auf, der so positioniert ist, dass er sich mit einem Gegen-Blockierabschnitt 68 des Nachstellelements 28 überlappt und diesen, bedingt durch seine vorangehend angesprochene Vorspannung, grundsätzlich in Richtung auf den Kraftspeicher 18 zu bzw. gegen diesen presst. Ferner ist am Blockierelement 54 im Endbereich 64 ein Erfassungsabschnitt 70 vorgesehen, der in Richtung auf den Kraftspeicher 18 zu abgewinkelt ist, im normalen, nicht mit Verschleiß oder übermäßigem Verschleiß behafteten Zustand jedoch zu diesem in jeder Betätigungssituation einen Abstand aufweist. Um ein ungewünschtes Verschwenken des Blockierelements 54 zu verhindern, ist an der Anpressplatte 22 ein Sicherungsstift 72 vorgesehen, welcher eine langlochartige Aussparung 74 im Endbereich 64 des Blockierelements 54 durchsetzt. Das Blockierelement 54 kann also eine Kipp- bzw. Verschwenkbewegung im Bereich seiner beiden Vorsprünge 56 ausführen, kann ansonsten jedoch nicht gedreht oder verschwenkt werden.

Die Funktionsweise der vorangehend detailliert hinsichtlich ihres konstruktiven Aufbaus beschriebenen Druckplattenbaugruppe ist wie folgt:

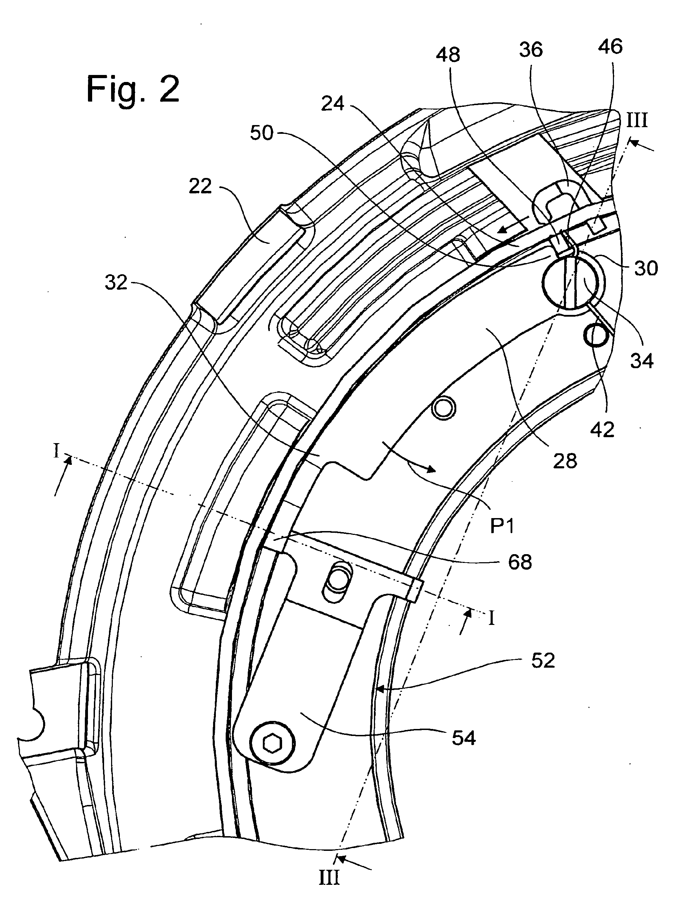

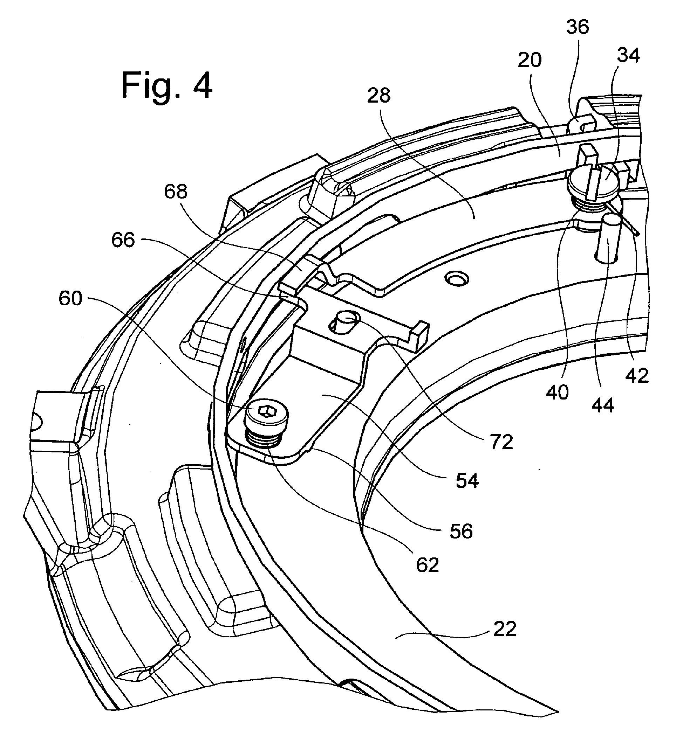

In einem nicht mit Verschleiß behafteten Zustand befinden sich die verschiedenen Baugruppen der Verschleißnachstellvorrichtung 20 in der insbesondere in den Fig. 2 und 4 erkennbaren Situation. Das heißt, das Stellelement 28 ist insbesondere auch durch Fliehkrafteinwirkung nach radial außen belastet, und zwar entgegen der durch die Schenkelfeder 40 über das Übertragungsglied 36 auf dieses ausgeübten und dieses grundsätzlich nach radial innen vorspannenden Belastung, wie durch einen Pfeil P1 in Fig. 2 verdeutlicht. Um auch im Stillstand, also bei fehlender Fliehkraftbelastung eine Verschwenkung des Nachstellelements 28 nach radial innen zu verhindern, presst das Blockierelement 54 mit seinem Blockierabschnitt 66 und Gegen-Blockierabschnitt 68 gegen den Kraftspeicher 18, so dass grundsätzlich das Stellelement 28 in der in den Fig. 2 und 4 erkennbaren Lage arretiert ist.

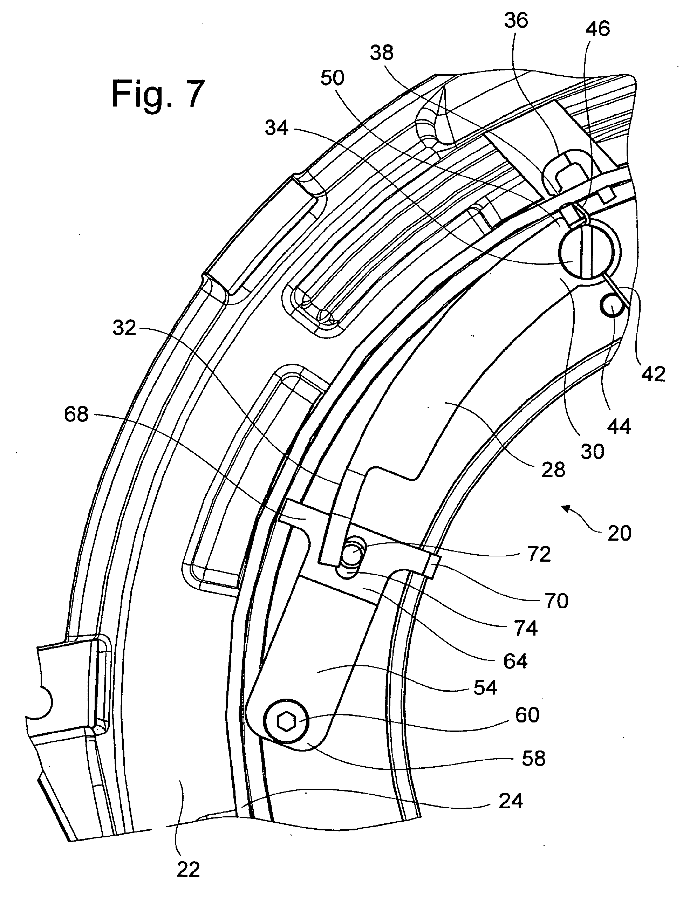

Tritt nun Verschleiß, beispielsweise der Reibbeläge einer nicht weiter dargestellten Kupplungsscheibe, auf, so bedeutet dies, dass sich im eingerückten Zustand die Anpressplatte 22 näher an die nicht dargestellte Schwungmasse heran verlagert, also ihre Einbaulage bezüglich des Gehäuses 12 ändert. Dies führt zu einer stärkeren Entspannung des hier als Membranfeder ausgebildeten Kraftspeichers 18 mit der Folge, dass dieser, wie durch einen Pfeil P2 in Fig. 1 verdeutlicht, im radial inneren Bereich näher an die Anpressplatte 22 heranrückt. Ist ein gewisses Ausmaß an Verschleiß erreicht oder überschritten, tritt der Kraftspeicher 18 in Kontakt mit dem Erfassungsabschnitt 70 des Blockierelements 54 und belastet somit dieses entgegen der Vorspannwirkung der Feder 62 in Richtung des Pfeils P3. Die Folge davon ist, dass der Blockierabschnitt 66 den Gegen-Blockierabschnitt 68 und somit das Stellelement 28 freigibt und nicht mehr in der in der Fig. 4 dargestellten Lage arretiert. Da Verschleiß im Allgemeinen jedoch nur im Drehbetrieb einer derartigen Druckplattenbaugruppe 10 auftritt, wird in dieser Situation grundsätzlich eine Fliehkraftbeaufschlagung das Stellelement 28 weiterhin in seiner radial äußeren und beispielsweise an der Innenseite des Verschleißnachstellrings anliegenden Lage halten. Wird jedoch das System nachfolgend zum Stillstand gebracht, so ist keine Fliehkrafteinwirkung mehr vorhanden, die dann das Stellelement 28 entgegen der Wirkung der Schenkelfeder 40 nach radial außen vorspannt. Da auch im Stillstand, also bei abgestelltem Fahrzeug, die Druckplattenbaugruppe 10 grundsätzlich in ihrer eingerückten Lage sein wird, ist das Blockierelement 54 auch dann so belastet, dass es den Gegen-Blockierabschnitt 68 nicht mehr gegen den Kraftspeicher 18 presst. Die Schenkelfeder 40 kann dann das Stellelement 28 verschwenken, so dass dieses sich in Richtung vom Nachstellring 20 weg bewegt und in die in Fig. 7 dargestellte Nachstellausgangsstellung gelangt. Diese ist vorgegeben durch den Stift 72, der nicht nur das Blockierelement 54 gegen ungewünschte Verschwenkung sichert, sondern auch einen radial inneren Anschlag für das Stellelement 28 bereitstellt. Bei dieser Verschwenkbewegung folgt das Übertragungsglied 36 der sich in Umfangsrichtung um den Bolzen 34 bewegenden Schulter 50 des Nachstellelements 28, so dass es unter der Belastungswirkung des Schenkels 46 sich geringfügig in Umfangsrichtung bezüglich des Nachstellrings 24 bewegen wird.

Wird nachfolgend das System wieder gestartet, d.h. beispielsweise eine Brennkraftmaschine angelassen und somit auch die Druckplattenbaugruppe 10 wieder zur Drehung um die Drehachse A angetrieben, so wird bei noch immer im Einrückzustand sich befindender Druckplattenbaugruppe 10 nunmehr eine Fliehkraft auf das Stellelement 28 einwirken. Da das Blockierelement 54 durch die Wechselwirkung des Erfassungsabschnitts 70 mit dem Kraftspeicher 18 immer noch in seiner Freigabestellung ist, ist das Stellelement 28 nicht in der in Fig. 7 gezeigten Stellung arretiert und es kann sich nunmehr wieder nach radial außen verlagern, d.h. um den Bolzen 34 verschwenken. Das Verschwenken tritt nur ein, wenn die Kupplung betätigt wird. Diese Verschwenkbewegung verläuft entgegen der Vorspannwirkung der Schenkelfeder 40 und spannt diese nunmehr über den U-Schenkel 48 des Übertragungsglieds 36. Bei dieser Verschwenkbewegung wird also das Übertragungsglied 36 wieder in Umfangsrichtung belastet und verkippt geringfügig bezüglich des Nachstellrings 24, so dass dieser nunmehr in der Aussparung 38 geklemmt wird. Es ist in dieser Situation dann ein Reibungsklemmsitz zwischen dem Übertragungsglied 36 und dem Nachstellring 24 hergestellt, so dass durch die fliehkraftbedingt weiter anhaltende Verschwenkung des Nachstellelements 28 der Nachstellring 24 zusammen mit dem Übertragungsglied 36 zur entsprechenden Bewegung in Umfangsrichtung angetrieben wird. Diese Bewegung dauert an, bis das Stellelement 28 wieder radial innen am Nachstellring 24 anliegt und in seiner in Fig. 4 gezeigten Stellung ist. Durch die Wirkung der Rampenflächenanordnung 26 führt, wie bereits ausgeführt, die Drehung bzw. Umfangsverlagerung des Nachstellrings 24 dazu, dass die aus Nachstellring 24 und Anpressplatte 22 gebildete Baugruppe ihre gesamte Axialdicke erhöht, und zwar in einem mit der Verschwenkung des Nachstellelements 28 korrespondierenden Kompensationsausmaß. Das heißt, jede Verschwenkbewegung des Nachstellelements 28 zwischen ihrer Nachstellausgangsstellung, die in Fig. 7 gezeigt ist, und ihrer beispielsweise in Fig. 4 gezeigten Grundstellung, führt zu einer Verschleißkompensation in einem auch durch die Steigung der Rampenflächenanordnung 26 definierten Ausmaß.

Nachdem auf diese Art und Weise ein Verschleißnachstellvorgang durchgeführt worden ist und das Stellelement 28 wieder in seiner radial äußeren Stellung ist, gelangt der Kraftspeicher 18 nicht mehr in Wechselwirkung mit dem Erfassungsabschnitt 70 am Blockierelement 54, so dass dieses wieder in seine Blockierstellung gelangen kann, in welcher es den Gegen-Blockierabschnitt 68 gegen den Kraftspeicher 18 pressen kann und somit das Stellelement 28 gegen Verschwenkung nach radial innen blockiert.

Bei dieser erfindungsgemäßen Druckplattenbaugruppe ist ein sehr einfach aufgebauter und betriebssicherer Mechanismus zur Verschleißkompensation vorhanden. Von Bedeutung ist, dass die Nachstellbewegung, insbesondere des Nachstellrings 24, nicht durch Federvorbelastung induziert wird, sondern durch aktives Antreiben vermittels des Nachstellelements 28. Es sind also überhaupt keine den Nachstellring 24 in Umfangsrichtung vorspannenden Federelemente o.dgl. vorhanden, so dass die Gefahr einer Ermüdung derartiger Bauteile ausgeschlossen werden kann. Ein Zurückdrehen des Nachstellrings 24 kann durch die Neigung der Rampenflächenanordnung 26 verhindert werden. Da weiterhin die Verschwenkbewegung des Nachstellelements 28 nach radial außen durch den Nachstellring 24 selbst begrenzt wird, kann ein undefiniertes Verschwenken und Nachstellen vollständig ausgeschlossen werden.

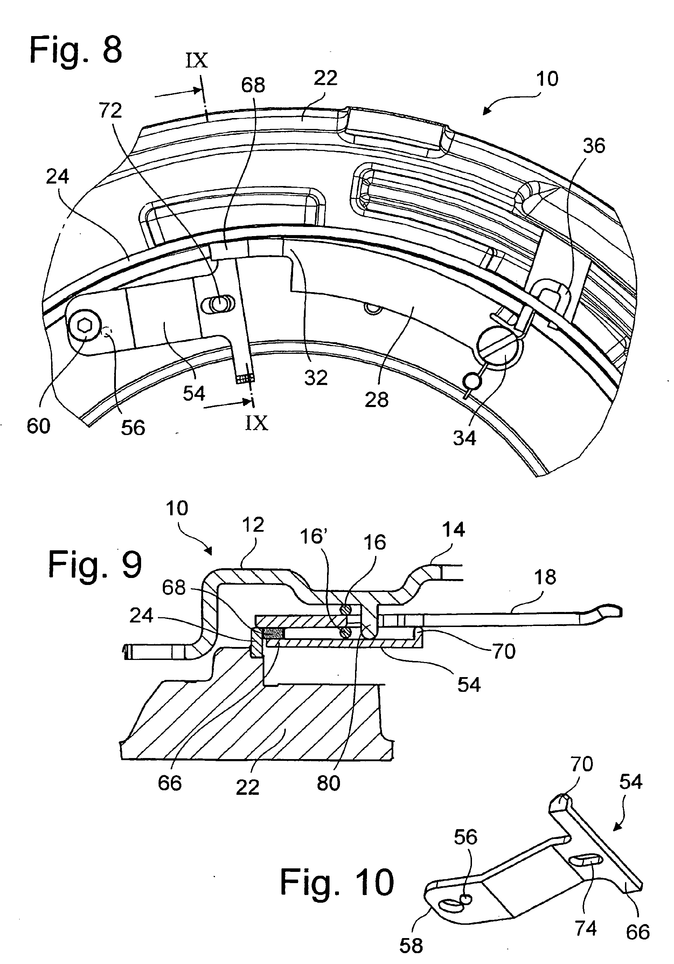

In Fig. 8 bis 10 ist eine Ausgestaltungsform der erfindungsgemäßen Druckplattenbaugruppe 10 für eine Kupplung des gedrückten Typs dargestellt. Wenn also bei der vorangehend beschriebenen Ausgestaltungsvariante der Kraftspeicher 18 im radial inneren Bereich zum Ausrücken ziehend beaufschlagt wird, also mit einer Kraft beaufschlagt wird, die diesen in Richtung von der Anpressplatte 22 wegzieht, wird bei der in den Fig. 8 und 9 dargestellten Druckplattenbaugruppe 10 für eine Kupplung des gedrückten Typs der Kraftspeicher 18 in seinem radial inneren Bereich drückend beaufschlagt, um einen Ausrückvorgang durchzuführen. Drückend heißt hier, dass eine Kraftbeaufschlagung in Richtung auf die Anpressplatte 22 zu erfolgt.

Man erkennt zunächst, dass der Kraftspeicher 18 durch zwei Abstützringe 16, 16' axial abgestützt ist und beispielsweise durch nicht dargestellte Distanzbolzen oder dergleichen am Bodenbereich 14 des Gehäuses 12 gehalten ist. Mit einem außerhalb dieser Abstützung bezüglich des Gehäuses 12 liegenden Bereich beaufschlagt der Kraftspeicher 18 den Nachstellring 24 und presst diesen gegen die Anpressplatte 22. Dadurch wird die Anpressplatte 22 in Richtung auf eine Kupplungsscheibe bzw. eine Schwungmasse zu gepresst.

In Zuordnung zu dem Blockierelement 54, das mit seinem Erfassungsabschnitt 70 den Kraftspeicher 18 in seinem Bereich radial innerhalb der Abstützung am Gehäuse 12 berührt, ist am Bodenbereich 14 des Gehäuses 12 ein Bewegungsanschlag 80 vorgesehen. Dieser vorsprungartige Bewegungsanschlag 80 erstreckt sich näherungsweise axial vom Bodenbereich 14 und durchsetzt den Kraftspeicher 18 beispielsweise zwischen zwei sich nach radial innen erstreckenden Federzungen oder im Bereich einer dafür extra vorgesehenen Durchgriffsöffnung. Das zur Zusammenwirkung mit dem Blockierelement 54 vorgesehene freie Ende des Bewegungsanschlags 80 liegt also an der vom Bodenbereich 14 abgewandten axialen Seite des Kraftspeichers 18.

Man erkennt in den Fig. 8 und 10 weiter, dass das Abstützelement 54 bei dieser Ausgestaltungsvariante nur einen Abstützvorsprung 56 aufweist, der bezüglich einer durch den Bolzen 60 und den Sicherungsstift 72 hindurchlaufenden Linie nach radial innen versetzt liegt. Die vermittels der Vorspannfeder 62 erzeugte Kraft führt also nicht nur dazu, dass das Blockierelement 54 mit seinem Blockierabschnitt 66 und seinem Erfassungsabschnitt 70 wirksam werden kann, sondern erzeugt ein Kippmoment, in Folge dessen eine verstärkte Anpressung des Erfassungsabschnitts 70 am Kraftspeicher 18 erlangt wird.

In einem nicht mit Verschleiß behafteten bzw. bereits kompensierten Zustand wird bei Durchführung von Ein- bzw. Auskuppelvorgängen der Bewegungsanschlag 80 nicht in Kontakt mit dem Blockierelement 54 treten, um die Relativlage des Blockierabschnitts 66 bzw. des Erfassungsabschnitts 70 bezüglich des Kraftspeichers 18 nicht zu verändern. Gegebenenfalls kann hier ein leichter Anlagekontakt zwischen dem Bewegungsanschlag 80 und dem Blockierelement 54 akzeptiert werden.

Tritt Verschleiß auf, so wird im eingerückten Zustand die Anpressplatte 22 sich näher an die Schwungmasse und weiter vom Gehäuse 12 weg bewegen. In der Darstellung der Fig. 9 bedeutet dies, dass der Kraftspeicher 18 mit seinem radial äußeren Bereich sich ebenfalls in Richtung vom Bodenbereich 14 des Gehäuses 12 weg bewegen wird, während der radial innerhalb der Sicherungsringe 16, 16' liegende Bereich sich dem Bodenbereich 14 annähern wird. Im Zuge dieser Annäherung wird jedoch der Bewegungsanschlag 80 für das Blockierelement 54 wirksam werden, so dass dieses nunmehr mit seinem Blockierabschnitt 66 vom Gegen-Blockierabschnitt 68 abheben wird. Auf Grund der vorangehend angesprochenen seitlichen Positionierung des einzigen Abstützvorsprungs 56 kann in dieser Phase der Kontakt zwischen dem Erfassungsabschnitt 70 und dem Kraftspeicher 18 aufrecht erhalten bleiben.

Dieser Zustand, in welchem der Gegen-Blockierabschnitt 68 des Nachstellelements 28 nicht mehr blockiert ist, wird auch im Stillstand bei dann eingerückter Kupplung vorliegen, so dass das Nachstellelement 28 wiederum unter der Vorspannwirkung der Schenkelfeder 40 nach innen verschwenken kann, bis es am Sicherungsstift 72 anliegt. Bei der nachfolgenden Inbetriebnahme wird beim ersten Ausrücken, also wenn der Kraftspeicher 18 die Beaufschlagungswirkung auf den Nachstellring 24 mindert oder aufgibt, das Nachstellelement, sowie vorangehend beschrieben, entgegen der Vorspannwirkung der Schenkelfeder 40 und unter Verlagerung des Übertragungsglieds 36 wieder nach radial außen schwenken und dabei den Nachstellring 24 verdrehen. Auf diese Art und Weise wird der zuvor aufgetretene und durch Zusammenwirkung des Bewegungsanschlags 80 mit dem Blockierelement 54 sensierte Verschleiß kompensiert.

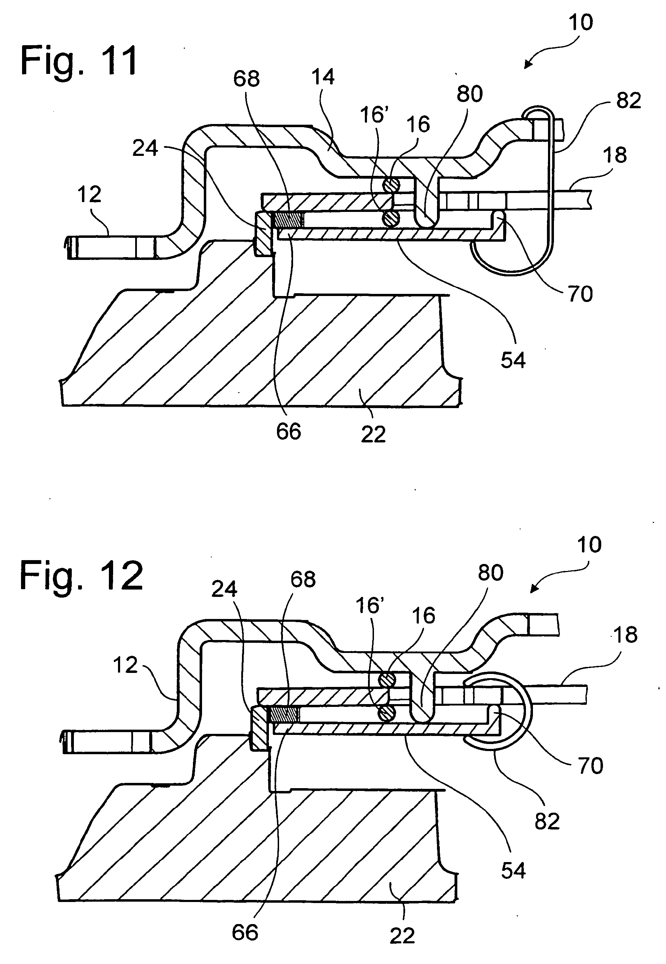

In Fig. 11 ist eine Abwandlung der vorangehend beschriebenen Druckplattenbaugruppe 10 dargestellt, wobei hier ein Unterschied in der Erzeugung der das Blockierelement 54 in Richtung auf den Kraftspeicher 18 zu vorspannenden Kraft vorhanden ist. Man erkennt hier ein Klammerelement 82, beispielsweise in Form einer Bügelfeder, die am Bodenbereich 14 des Gehäuses 12 einerseits und am Blockierelement 54 nahe dem Erfassungsabschnitt 70 andererseits angreift. Durch dieses Klammerelement 82 wird ein Kippmoment erzeugt, das durch die Abstützung des Blockierelements 54 vermittels des Erfassungsabschnitts 70 am Kraftspeicher 18 dafür sorgt, dass der Blockierabschnitt 66 den Gegen-Blockierabschnitt 68 gegen den Kraftspeicher 18 presst. Bei wirksam werden des Bewegungsanschlags 80 am Gehäuse 12 wird ein Gegenmoment generiert, das dann wieder zum Abheben des Blockierabschnitts 66 vom Gegen-Blockierabschnitt 68 führt. Da bei der Durchführung von Einkuppel-und Auskuppelvorgängen der radial innere Bereich des Kraftspeichers 18 und somit auch der dort anliegende Bereich des Blockierelements 54 sich axial bewegen werden, muss auf Grund der Abstützung des Klammerelements 82 bezüglich des sich dabei axial nicht bewegenden Bodenbereichs 14 des Gehäuses 12 das Klammerteil 82 eine Elastizität aufweisen, die die Durchführung dieser Bewegung gestattet.

Bei der in Fig. 12 dargestellten Variante ist dieses Klammerelement 82 nicht bezüglich des Gehäuses 12, sondern bezüglich des Kraftspeichers 18 abgestützt und hintergreift diesen an seiner vom Blockierelement 54 abgewandten Seite. Die Funktion des Klammerelements 82 ist die gleiche, wie vorangehend beschrieben, wobei bei dieser Ausgestaltungsvariante das Klammerelement 82 beispielsweise eine geringere Flexibilität aufweisen kann, da die zwischen dem Blockierelement 54 und dem Kraftspeicher 18 auftretende Axialbewegung geringer sein wird, als die Axialbewegung des Kraftspeichers 18 bezüglich des Gehäuses 12.

Aus der vorangehenden Beschreibung erkennt man, dass bei den in den Fig. 8 bis 12 dargestellten Ausgestaltungsvarianten die wesentliche Funktion der Verschleißsensierung durch die Zusammenwirkung des Bewegungsanschlags 80 mit dem Blockierelement 54 erfolgt.

Abschließend sei darauf hingewiesen, dass die Prinzipien der vorliegenden Erfindung nicht nur bei den dargestellten Kupplungen oder Druckplattenbaugruppen des Normal-Geschlossen-Typs eingesetzt werden können, sondern auch bei Kupplungen des Normal-Offen-Typs bzw. auch bei Mehrscheibenkupplungen oder Doppelkupplungen.

## Patentansprüche

1. Druckplattenbaugruppe für eine Reibungskupplung, umfassend eine Gehäuseanordnung (12), eine in der Gehäuseanordnung (12) vorgesehene und mit dieser um eine Drehachse (A) drehbare Anpressplatte (22), eine Kraftbeaufschlagungsanordnung (18), vorzugsweise Kraftspeicher, welche bezüglich der Gehäuseanordnung (12) und der Anpressplatte (22) abstützbar ist, eine Verschleißnachstellvorrichtung (20) im Kraftübertragungsweg zwischen der Kraftbeaufschlagungsanordnung (18) und der Anpressplatte (22) oder der Gehäuseanordnung, umfassend wenigstens ein zur Verschleißnachstellung bewegbares Verschleißnachstellelement (24), wobei dem wenigstens einen Verschleißnachstellelement (24) ein Stellelement zugeordnet ist, welches bei Durchführung einer Stellbewegung (28) das wenigstens eine Verschleißnachstellelement zur Durchführung einer Verschleißnachstellung (24) zur Bewegung antreibt, wobei das dem wenigstens einen Verschleißnachstellelement (24) zugeordnete Stellelement (28) durch Fliehkrafteinwirkung zur Durchführung einer Stellbewegung beaufschlagbar ist,
**dadurch gekennzeichnet, dass** das Stellelement (28) über ein Übertragungsglied (36) mit dem Verschleißnachstellelement (24) zusammenwirkt, wobei das Übertragungsglied (36) bei Auftreten von Verschleiß und Bringen des Stellelements (28) in eine Nachstellausgangsstellung bezüglich des Verschleißnachstellelements (24) bewegbar ist und bei Durchführung einer Verschleißnachstellung und Stellbewegung des Stellelements (28) aus der Nachstellausgangsstellung heraus durch das Stellelement (28) zur gemeinsamen Bewegung mit dem Verschleißnachstellelement beaufschlagbar ist.

2. Druckplattenbaugruppe nach Anspruch 1,
**dadurch gekennzeichnet, dass** das Übertragungsglied (36) zur Verschleißnachstellung an dem Verschleißnachstellelement (24) arretierbar ist.

3. Druckplattenbaugruppe nach Anspruch 2,
**dadurch gekennzeichnet, dass** das Übertragungsglied (36) durch das Stellelement (28) in Reibungsklemmsitz an dem Verschleißnachstellelement (24) bringbar ist.

4. Druckplattenbaugruppe nach einem der Ansprüche 1 bis 3,
**dadurch gekennzeichnet, dass** ein Vorspannelement (40) zum Vorspannen des Stellelements (28) in Richtung Nachstellausgangsstellung vorgesehen ist.

5. Druckplattenbaugruppe nach Anspruch 3 und Anspruch 4,
**dadurch gekennzeichnet, dass** das Vorspannelement (40) das Übertragungsglied (36) zum Lösen des Reibungsklemmsitzes und zur Bewegung des Übertragungsglieds (36) bezüglich des Verschleißnachstellelements (24) beaufschlagt.

6. Druckplattenbaugruppe nach Anspruch 5,
**dadurch gekennzeichnet, dass** das Vorspannelement (40) das Stellelement (28) über das Übertragungsglied (36) beaufschlagt.

7. Druckplattenbaugruppe nach einem der Ansprüche 1 bis 6,
**dadurch gekennzeichnet, dass** das Stellelement (28) an der Anpressplatte (22) schwenkbar getragen ist.

8. Druckplattenbaugruppe nach einem der Ansprüche 1 bis 7,
**dadurch gekennzeichnet, dass** dem Stellelement (28) eine Blockiervorrichtung (54) zugeordnet ist, welche dieses bei Auftreten von zu kompensierendem Verschleiß zur Bewegung in die Nachstellausgangsstellung freigibt.

9. Druckplattenbaugruppe nach Anspruch 8,
**dadurch gekennzeichnet, dass** die Blockiervorrichtung (54) ein in eine Blockierstellung vorgespanntes Blockierelement (54) umfasst, welches bei Auftreten von zu kompensierendem Verschleiß in eine Freigabestellung bringbar ist.

10. Druckplattenbaugruppe nach Anspruch 9,
**dadurch gekennzeichnet, dass** das Blockierelement (54) an der Anpressplatte (22) zwischen der Blockierstellung und der Freigabestellung verschwenkbar ist.

11. Druckplattenbaugruppe nach einem der Ansprüche 8 bis 10,
**dadurch gekennzeichnet, dass** in der Blockierstellung die Blockiervorrichtung (54) das Stellelement (28) gegen Bewegung in die Nachstellausgangsstellung einklemmt.

12. Druckplattenbaugruppe nach Anspruch 10 und Anspruch 11,
**dadurch gekennzeichnet, dass** das Blockierelement (54) das Stellelement (28) gegen die Kraftbeaufschlagungsanordnung (18) klemmt.

13. Druckplattenbaugruppe nach einem der Ansprüche 8 bis 12,
**dadurch gekennzeichnet, dass** die Blockiervorrichtung (54) durch eine bei Auftreten von Verschleiß sich bezüglich des Stellelements (28) verschleißbedingt verlagernde Baugruppe (18) in die Freigabestellung bringbar ist.

14. Druckplattenbaugruppe nach Anspruch 13,
**dadurch gekennzeichnet, dass** die Baugruppe die Kraftbeaufschlagungsanordnung (18) umfasst.

15. Druckplattenbaugruppe nach Anspruch 13,
**dadurch gekennzeichnet, dass** die Baugruppe die Gehäuseanordnung (12) umfasst.

## Claims

1. Pressure plate assembly for a friction clutch, comprising a housing arrangement (12), a contact pressure plate (22) provided in the housing arrangement (12) and with the latter rotatable about an axis of rotation (A), a force-exerting arrangement (18), preferably a stored-energy device, which can be braced in relation to the housing arrangement (12) and the contact pressure plate (22), a wear take-up mechanism (20) located in the force transmission path between the force exerting arrangement (18) and the contact pressure plate (22) or the housing arrangement, comprising at least one moveable wear take-up element (24) for taking up the wear, an adjusting element, which in performing an adjusting movement
drives the movement of one or more wear take-up elements for performing a wear take-up , being assigned to one or more wear take-up elements (24), the adjusting element (28) assigned to one or more wear take up elements (24) being subjected to the action of a centrifugal force for performing an adjusting movement, **characterized in that** the adjusting element (28) interacts with the wear take-up element (24) by way of a transmission member (36), the transmission member (36), when wear occurs and the adjusting element (28) is brought into a take-up starting position, being moveable relative to the wear take-up element (24) and, in performing a wear take-up and adjusting movement of the adjusting element (28), being brought out of the take-up starting position by the adjusting element (28) for their coconcerted movement with the wear take-up element.

2. Pressure plate assembly according to Claim 1, **characterized in that** the transmission member (36) can be arrested on the wear take-up element (24) for taking up the wear.

3. Pressure plate assembly according to Claim 2, **characterized in that** the adjusting element (28) is capable of bringing the transmission member (36) into frictional clamping engagement against the wear take-up element (24).

4. Pressure plate assembly according to any one of Claims 1 to 3, **characterized in that** a pre-tensioning element (40) is provided for biasing the adjusting element (28) in the direction of the take-up starting position.

5. Pressure plate assembly according to Claim 3 and Claim 4, **characterized in that** the pre-tensioning element (40) acts upon the transmission member (36) in order to release the frictional clamping engagement and to move the transmission member (36) in relation to the wear take-up element (24).

6. Pressure plate assembly according to Claim 5, **characterized in that** the pre-tensioning element (40) acts upon the adjusting element (28) via the transmission member (36).

7. Pressure plate assembly according to any one of Claims 1 to 6, **characterized in that** the adjusting element (28) is pivotally mounted on the contact pressure plate (22).

8. Pressure plate assembly according to any one of Claims 1 to 7, **characterized in that** a locking device (54) is assigned to the adjusting element (28) and releases the latter for movement into the take-up starting position when there is wear to be compensated for.

9. Pressure plate assembly according to Claim 8, **characterized in that** the locking device (54) comprises a locking element (54) biased towards a locking position, which can be brought into a release position when there is wear to be compensated for.

10. Pressure plate assembly according to Claim 9, **characterized in that** the locking element (54) can be swivelled on the contact pressure plate (22) between the locking position and the release position.

11. Pressure plate assembly according to any one of Claims 8 to 10, **characterized in that** in the locking position the locking device (54) clamps the adjusting element (28) to prevent movement into the take-up starting position.

12. Pressure plate assembly according to Claim 10 and Claim 11, **characterized in that** the locking element (54) clamps the adjusting element (28) against the force-exerting arrangement (18).

13. Pressure plate assembly according to any one of Claims 8 to 12, **characterized in that** the locking device (54) can be brought into the release position by a subassembly (18) that is displaced in relation to the adjusting element (28) as and when wear occurs.

14. Pressure plate assembly according to Claim 13, **characterized in that** the subassembly comprises the force-exerting arrangement (18).

15. Pressure plate assembly according to Claim 13, **characterized in that** the subassembly comprises the housing arrangement (12).

## Revendications

1. Ensemble de plateau de pression pour un embrayage à friction, comprenant un ensemble de carter (12), un plateau de pression (22) prévu dans l'ensemble de carter (12) et rotatif avec ce dernier autour d'un axe de rotation (A), un ensemble de sollicitation en force (18), de préférence un accumulateur de force, qui peut être soutenu par rapport à l'ensemble de carter (12) et au plateau de pression (22), un dispositif de rattrapage d'usure (20) dans le chemin de transmission de force entre l'ensemble de sollicitation en force (18) et le plateau de pression (22) ou l'ensemble de carter, comprenant au moins un élément de rattrapage d'usure (24) pouvant être déplacé pour le rattrapage d'usure, sachant qu'est associé à l'élément de rattrapage d'usure au moins unique (24) un élément de réglage qui, lors de l'exécution d'un mouvement de réglage , entraîne en déplacement l'élément de rattrapage d'usure au moins unique pour effectuer un rattrapage d'usure sachant que l'élément de réglage (28) associé à l'élément de rattrapage d'usure au moins unique (24) peut être sollicité par l'action de la force centrifuge pour effectuer un mouvement de réglage,
**caractérisé en ce que** l'élément de réglage (28) coopère avec l'élément de rattrapage d'usure (24) par l'intermédiaire d'un organe de transmission (36), sachant que l'organe de transmission (36) peut être déplacé lorsque de l'usure apparaît et que l'élément de réglage (28) est amené dans une position initiale de rattrapage par rapport à l'élément de rattrapage d'usure (24), et il peut être sollicité par l'élément de réglage (28) pour se déplacer conjointement avec l'élément de rattrapage d'usure lorsqu'un rattrapage d'usure est effectué et que l'élément de réglage (28) effectue un mouvement de réglage à partir de la position initiale de rattrapage.

2. Ensemble de plateau de pression selon la revendication 1, **caractérisé en ce que** l'organe de transmission (36) peut être assujetti sur l'élément de rattrapage d'usure (24) pour le rattrapage d'usure.

3. Ensemble de plateau de pression selon la revendication 2, **caractérisé en ce que** l'organe de transmission (36) peut être amené par l'élément de réglage (28) en ajustement serré par friction contre l'élément de rattrapage d'usure (24).

4. Ensemble de plateau de pression selon l'une quelconque des revendications 1 à 3, **caractérisé en ce qu'**un élément de précontrainte (40) est prévu pour précontraindre l'élément de réglage (28) en direction de la position initiale de rattrapage.

5. Ensemble de plateau de pression selon la revendication 3 et la revendication 4, **caractérisé en ce que** l'élément de précontrainte (40) sollicite l'organe de transmission (36) pour supprimer l'ajustement serré par friction et pour déplacer l'organe de transmission (36) par rapport à l'élément de rattrapage d'usure (24).

6. Ensemble de plateau de pression selon la revendication 5, **caractérisé en ce que** l'élément de précontrainte (40) sollicite l'élément de réglage (28) par l'intermédiaire de l'organe de transmission (36).

7. Ensemble de plateau de pression selon l'une quelconque des revendications 1 à 6, **caractérisé en ce que** l'élément de réglage (28) est porté à pivotement sur le plateau de pression (22).

8. Ensemble de plateau de pression selon l'une quelconque des revendications 1 à 7, **caractérisé en ce qu'**est associé à l'élément de réglage (28) un dispositif de blocage (54) qui, lorsque de l'usure à compenser apparaît, libère cet élément pour qu'il se déplace dans la position initiale de rattrapage.

9. Ensemble de plateau de pression selon la revendication 8, **caractérisé en ce que** le dispositif de blocage (54) comprend un élément de blocage (54) qui est précontraint dans une position de blocage et qui peut être amené dans une position de libération lorsque de l'usure à compenser apparaît.

10. Ensemble de plateau de pression selon la revendication 9, **caractérisé en ce que** l'élément de blocage (54) peut être pivoté sur le plateau de pression (22) entre la position de blocage et la position de libération.

11. Ensemble de plateau de pression selon l'une quelconque des revendications 8 à 10, **caractérisé en ce que**, dans la position de blocage, le dispositif de blocage (54) serre l'élément de réglage (28) pour empêcher son déplacement dans la position initiale de rattrapage.

12. Ensemble de plateau de pression selon la revendication 10 et la revendication 11, **caractérisé en ce que** l'élément de blocage (54) serre l'élément de réglage (28) à l'encontre de l'ensemble de sollicitation en force (18).

13. Ensemble de plateau de pression selon l'une quelconque des revendications 8 à 12, **caractérisé en ce que** le dispositif de blocage (54) peut être amené dans la position de libération par un sous-ensemble (18) qui, lorsque de l'usure apparaît, se déplace du fait de l'usure par rapport à l'élément de réglage (28).

14. Ensemble de plateau de pression selon la revendication 13, **caractérisé en ce que** le sous-ensemble comprend l'ensemble de sollicitation en force (18).

15. Ensemble de plateau de pression selon la revendication 13, **caractérisé en ce que** le sous-ensemble comprend l'ensemble de carter (12).
